# EUROPEAN PATENT APPLICATION

(11) **EP 2 317 344 A1**
(43) Date of publication of application: **04.05.2011**
(21) Application number: 09174861.6
(22) Date of filing: 03.11.2009
(51) Int. Cl.: G01V 3/26

(54) **Method and system to monitor a hydrocarbon reservoir**

(71) Applicant: Nederlandse Organisatie voor Toegepast -Natuurwetenschappelijk Onderzoek TNO, 2628 VK Delft (NL)
(72) Inventor: Meekes, Jozef Antonius Chrysostomus, 3608 BA Maarssen (NL)
(74) Representative: Hatzmann, Martin

(57) **Abstract**

A method of monitoring an extent of a hydrocarbon reservoir below the earth's surface, includes the steps of applying a current between a second electrode (108) and a first electrode (106) that is part of a plurality of electrodes and measuring the magnetic field using a magnetometer (M) that are spaced apart from one another along a part of the earth's surface located above and optionally over the hydrocarbon reservoir (2). The second electrode (108) is positioned below the hydrocarbon reservoir (2). The method includes the step of measuring a magnetic field (F), which is caused by the current, by means of a magnetometer (M) that is also part of the plurality of magnetometers (M. The method includes the step of inferring from the measured magnetic field (F) the extent of the hydrocarbon reservoir (2), in a direction that is oriented substantially parallel with the earth's surface (4).

## Description

The invention relates to a method of monitoring a hydrocarbon reservoir, for example a reservoir containing naturally formed hydrocarbons.

Usually, optimisation of production from a subsurface hydrocarbon reservoir is a complicated task. One of the main reasons for this complexity is the inherent lack of knowledge about the situation and processes within and near the hydrocarbon reservoir. Such lack of knowledge for example complicates making decisions on drillings of wells, or makes estimates of future production possibilities less accurate. For making such decisions or estimates, or for performing other aspects of production optimisation, it is important to know the extent of the hydrocarbon reservoir before and during production. This for example indicates possible well positions and is an important factor for estimating future production possibilities.

A hydrocarbon reservoir usually extends generally parallel to the earth's surface, has an elongated shape, and extends in two longitudinal directions that are transverse to one another along the elongated reservoir. The extent of the hydrocarbon reservoir transversely of these longitudinal directions in a thickness direction of the hydrocarbon reservoir (e.g. in a substantially vertical direction, such as along the oil column) is often known from wellbore logs. However, a lateral extent of the hydrocarbon reservoir along these longitudinal directions is often unknown, especially after the production of the hydrocarbon started. Accordingly there is a need for a method to monitor, both before and after production has started, the extent of the hydrocarbon reservoir along its mutually transverse longitudinal directions. In addition, such an extent can change as a result of hydrocarbons being moved and being replaced by other pore fluids such as water, caused by the production.

Inspection of the earth's subsurface is often carried out by means of seismic methods. Seismic methods are suitable for recognising various geologic layers in the earth's subsurface (remote from the earth's surface), and have proven to be valuable in discovery of hydrocarbon reservoirs. Seismic methods have also been applied to monitoring reservoir depletion in time, often referred to as 4-D seismics. In 4-D seismics, an extent of the reservoir is determined repeatedly by using seismic methods. However, seismic methods are known to be sometimes less accurate. In addition, 4-D seismic determination of the extent of the hydrocarbon reservoir requires extensive and repeated field surveying, and computationally intensive numerical computations, and is therefore relatively costly to carry out.

It is therefore an objective of the present invention to provide a method for monitoring an extent of a deep (remote) hydrocarbon reservoir that meets one or more disadvantages of the known methods.

A non-prepublished patent application of the applicant proposes a method of monitoring an extent of a hydrocarbon reservoir below the earth's surface, including the steps of: q1) applying a current between a bottom current electrode and a top current electrode that is part of a plurality of electrodes that are spaced apart from one another along a part of the earth's surface located adjacent to the hydrocarbon reservoir, and above and optionally over the hydrocarbon reservoir, wherein the bottom current electrode is positioned below the hydrocarbon reservoir; q2) measuring an electrical potential, which is caused by the current, by means of a measurement electrode that is also part of the plurality of electrodes; and q3) inferring from the measured electrical potential the extent of the hydrocarbon reservoir, in a direction that is oriented substantially parallel with the earth's surface.

According to the present invention, there is provided a further advantageous method of monitoring a hydrocarbon reservoir located below the earth's surface, the method including the steps of:
a) applying an electric current between a first electrode and a second electrode, the reservoir extending between the first and second electrode so that at least part of the respective current lines circumvent the reservoir;
b) measuring a magnetic field, which is caused by the current; and
c) inferring from the measured magnetic field an extent of the hydrocarbon reservoir, particularly in a direction that is oriented substantially parallel with the earth's surface.

Thus, the inventor has found that magnetic field measurements can be used for inferring an extent of the reservoir. The method according to the present invention is similar to the previous method, and is relatively sensitive to changes of the reservoir's extent. Particularly, the present invention is very suitable to monitor deep underground reservoirs, for example reservoirs that are located at a depth of more than 100 m below the earth's surface, for example more than 500 m below the earth's surface (such as 1 km or more).

The present invention may optionally be combined with the application of one or more measurement electrodes for detecting an electrical potential (caused by the current). In that case, the resulting measured electrical potential can also be used to infer the extent of the hydrocarbon reservoir (for example, in a direction that is oriented substantially parallel with the earth's surface), in addition to the use of the magnetic field measurments, providing even higher accuracy and reliability.

It was realised that pore fluids in a hydrocarbon reservoir, such as oil, and pore fluids around hydrocarbon reservoirs, such as water, have a relatively large difference in their electrical properties, such as electrical conductivity and resistivity. Water has a relatively large electrical conductivity, and hydrocarbons such as oil have a relatively low electrical conductivity. The hydrocarbon reservoir, as a result, can be regarded as a body of relatively low electrical conductivity. Usually, significant amounts of salt are dissolved in the water around the hydrocarbon reservoir, which further increases its electrical conductivity.

Because of the relatively low conductivity, i.e. a relatively high electrical resistivity, of the hydrocarbon reservoir, in combination with the reservoir extending between (for example being located between) the electrodes, the current will predominantly flow around the hydrocarbon reservoir (i.e. current lines substantially circumvent the reservoir), and not through the reservoir. Also, the hydrocarbon reservoir usually extends, at least partly, in the direction that is oriented generally parallel with the earth's surface. Flow of the current from the second electrode to the first electrode, or from the first electrode to the second electrode, or flow in both directions, is thus resisted by the hydrocarbon reservoir. Consequently, in passing around the hydrocarbon reservoir, the current path lines will have a shape that depends on the extent of the hydrocarbon reservoir (for example in the direction that is oriented substantially parallel with the earth's surface). This current distribution generates a magnetic field that can be measured at or near the earth's surface., Thus, by measuring the magnetic field, the extent of the hydrocarbon reservoir in the direction that is oriented substantially parallel with the earth's surface can be inferred, and monitored.

Because of the relatively low conductivity of the hydrocarbon reservoir, it can be understood that the magnetic field along the part of the earth's surface will change significantly if the extent of the hydrocarbon reservoir changes, which contributes to the sensitivity of the method.

In addition, carrying out steps a), b), and/or c) can be less costly than carrying out a seismic measurement.

According to a preferred embodiment, each second first can be located in a wellbore that traverses the reservoir. For example, the first electrode(s) can be located below the reservoir (in that case, the first electrode can be called a "bottom electrode"). In case of application of a plurality of first electrodes, a plurality of wellbores can be used, each wellbore including one or more bottom electrodes. Also, for example, each second electrode can be located over the reservoir (in that case, the second electrode can be called a "top electrode").

Also, in a preferred embodiment, each first electrode can be located at a depth of 100 m or more below the earth's surface, for example a depth of 1000 m or more. This can be achieved by application of a respective wellbore that is provided with the electrode, as described above.

In yet a further advantageous embodiment, good results can be obtained in case the first and second electrode are spaced-apart from each other over a distance of more than 100 m.

In a further embodiment, the method utilizes a plurality of magnetometers to detect the magnetic field at a plurality of locations.
Preferably, during operation, the plurality of magnetometers are spaced apart from one another along the part of the earth's surface, which is indicated to be located above the hydrocarbon reservoir. The part of the earth's surface being located above the hydrocarbon reservoir does not require that the part of the earth's surface is located over the hydrocarbon surface. The part of the earth's surface is considered to be located over the hydrocarbon surface if an imaginary straight line that extends from the earth's surface perpendicular to the earth's surface, can reach the hydrocarbon reservoir.

When in this description the first electrode is indicated to be positioned below the hydrocarbon reservoir, then this means that an imaginary straight line that extends from a position on the earth's surface perpendicular to the earth's surface, and reaches the first electrode, also extends through the hydrocarbon reservoir. It is further noted that the term 'positioned below the hydrocarbon reservoir' also refers to positions that correspond with a lower portion of the hydrocarbon reservoir. In that case, the imaginary straight line has not extended completely through the hydrocarbon reservoir when it reaches the bottom current electrode.

It will be clear that the terms 'below' and 'above' are used in the normal sense for a human observer that stands with his feet on the part of the earth's surface.

Often, rock of the hydrocarbon reservoir contains oil. At the edge of the hydrocarbon reservoir, the oil is in contact with water contained in rock pores in a transition zone, which is usually referred to as the oil-water contact. As a result, the extent of the hydrocarbon reservoir, in the direction that is oriented substantially parallel with the earth's surface, is often limited by the oil-water contact. Therefore, preferably, inferring the extent of the hydrocarbon reservoir as in step c) may be performed by inferring the position of the oil-water contact.

Inferring in step c) can be carried out in various ways. It will be clear to the skilled person that, as the electrical current field and thus the magnetic field generated by this current field is influenced by the extent of the hydrocarbon reservoir, such inferring in general is possible. Preferably, a computer (or more general "a processor", which can be any type of digital processing unit or units capable of carrying out processing tasks) is used for inferring in step c). Preferably, inferring in step c) includes carrying out forward and/or inverse modelling of at least steps a) and b).

It is noted that when the expression monitoring is used, this may relate to measuring or determining the magnetic field at one moment in time, or may relate to a plurality of measurements at distinct moments in time.

In an embodiment, inferring in step c) is further based on a position of the first electrode, and/or a position of the second electrode. In addition, the position of each of the one or more magnetometers can be taken into account. It will be clear that the magnetic field will vary along at least the part of the earth's surface, above and adjacent to the hydrocarbon reservoir. Hence, it is advantageous to use the position of the magnetometer(s) for inferring the extent of the hydrocarbon reservoir in the direction that is oriented substantially parallel with the earth's surface (i.e. a lateral extent). It will also be clear that the measured magnetic field depends on the position of the first electrode and the second electrode. Hence, it is advantageous to use the position of the first electrode and/or the position of the second electrode for inferring the extent of the hydrocarbon reservoir in the direction that is oriented substantially parallel with the earth's surface. Preferably, inferring in step c) is further based on a position of each of the first electrode, a position of the magnetometer, and a position of the second electrode.

In an embodiment, step a) includes applying the current between the first (for example bottom) electrode and a plurality of second (for example top) electrodes. Preferably, at least two second electrodes are used, more preferably at least ten second electrodes. Using more than one electrode of the plurality of electrodes for applying the current towards or from the first electrode (or both towards and from the first electrode, such as when using alternating current), may enable increasing the sensitivity of the magnetic field for changes in the lateral extent of the hydrocarbon reservoir. A single first electrode can be applied to receive and/or transmit current to the second electrode(s). Alternatively, a plurality of first electrodes can be used, to receive and/or transmit current to the second electrode(s).

Preferably, a total number of second electrodes and/or their positions along the part of the earth's surface, is chosen and/or adapted based on a shape and size of the hydrocarbon reservoir.

Also, preferably, a mutual closest neighbour distance between the magnetometer positions (of a plurality of magnetometers) is in a range from 20 to 200 meter.

In an embodiment, the method includes the step of: d) repeating steps a) and b) using a plurality of second electrodes, wherein different second electrodes are used(active) in subsequent steps a) and b) (i.e.: different second electrodes are active during different steps a) and b) to exchange current with a first electrode).In that case, inferring in step c) can be based on the magnetic field measured in the plurality of steps b). Preferably, steps a) and b) are repeated until all electrodes of the plurality of second electrodes are used at least once (as the active second electrode).

Besides, in this case, when using a plurality of second electrodes, at least one second electrode can be used to measure an electrical potential (the second electrode then being a measurement electrode), which is caused by the current. As is mentioned above, the resulting measured electrical potential can also be used to infer the extent of the hydrocarbon reservoir (for example, in a direction that is oriented substantially parallel with the earth's surface), in addition to the use of the magnetic field measurements.

In an embodiment, an afore-mentioned optional measurement electrode can be located over an edge region of the hydrocarbon reservoir. The inventor discovered that in the edge region a change in the potential as a result of a change in the lateral extent of the hydrocarbon reservoir, is relatively large. The edge region may for example extent from the edge of the hydrocarbon reservoir in the direction that is oriented substantially parallel with the earth's surface over a distance equal to 300%, 100%, or 50% of a depth of the reservoir.

In an embodiment, the method further includes the step of: e) carrying out a numerical simulation of steps a) and b) by using a geo-electrical model, which is based on electrical properties of a first region of the earth in and around the hydrocarbon reservoir, and of a second region of the earth from the second region up to the earth's surface, wherein the geo-electrical model includes at least a simulated extent of the hydrocarbon reservoir as an input parameter, and a means of calculating the magnetic field as an output parameter; wherein inferring in step c) includes matching the simulated magnetic field and the magnetic field measured in step b), by, optionally iterated, adapting of the simulated extent of the hydrocarbon reservoir in the numerical simulation, or of parameters of other relevant bodies in the subsurface, and further includes determining the extent of the hydrocarbon reservoir from the simulated extent of the hydrocarbon reservoir. Such a method yields an accurate determination of the extent of the hydrocarbon reservoir. In this method, inferring in step c) may be based on a position of the first electrode, a position of a magnetometer (measuring the magnetic field), and a position of the second electrode. Such positions can be used as input for the numerical simulations.

In one embodiment, the method includes carrying out the combination of steps a) and b) a plurality of times, and further includes the step: f) monitoring the development of the extent of the hydrocarbon reservoir in time. This embodiment has a specific significance because it enables measuring changes in the potentials measured in steps b). Such changes may be predominantly related to changes in the lateral extent of the hydrocarbon reservoir due to hydrocarbon production. These changes in the lateral extent of the hydrocarbon reservoir may be more accurately determined than the extent of the hydrocarbon reservoir as such, as they are not influenced by any inhomogeneities in the subsurface. Such inhomogeneities influence each subsequent measurement of the magnetic field equally. Preferably, in this embodiment inferring in step c) is further based on the changes in the measured magnetic fields in steps b).

The method of this last embodiment can form an alternative for seismic 4-D imaging. The electrodes and the one or more magnetometers may, in a time interval that includes the plurality of times, be left in place at their positions along the part of the earth's surface. This further reduces cost of the method, and also enables monitoring with a short sampling time.

In another embodiment, the method includes carrying out the combination of steps a), b), and c) a plurality of times, wherein monitoring in time in step f) is based on the extents inferred in steps c).

In an alternative embodiment, the method includes carrying out step d) before step c) each time step c) is carried out. In this way the tomographic method can be repeated.

In a further embodiment, a plurality of first electrodes are spaced apart from one another in a grid along the part of the earth's surface. This enables accurate determination of the shape and/or size of the hydrocarbon in the plane that is oriented substantially parallel with the earth's surface.

Preferably, an optimal position of the or each magnetometer (and one or more optional measurement electrodes) is determined by forward modelling using the geo-electrical model.

In a still further embodiment, step a) includes application of a direct current, a time-varying current, or both. In this way, a signal-to-noise ratio of the measured potential can be increased.

According to a particular aspect of the invention, the method is applied for monitoring progress of a steam flood in a tar sand and/or a water flood in an oil reservoir or to any other subsurface production process that incorporates fluids and/or gasses that have a contrast in electrical conductivity compared to the surrounding pore fill.

The invention will now be illustrated, in a non-limiting way, with reference to the accompanying figures, wherein:
Figures 1A and 1B show a hydrocarbon reservoir below the earth's surface, in a cross-sectional view of a portion of the earth, and the application of a magnetometer;
Figure 2A shows a graph of two typical examples of a potential field along a part of the earth's surface;
Figure 2B shows the relative potential along a part of the earth's surface for the situation sketched in figures 1A and 1B;
Figure 3A shows a reservoir, a bottom current electrode, a wellbore, and a plurality of electrodes in a cross-sectional view of a portion of the earth; and
Figure 3B shows a wellbore and a plurality of electrodes in a top view of a part of the earth's surface.
Figure 4 is similar to Figure 1A, and shows a system and method according to an embodiment according to the present invention;
Figure 5A shows a graph of two typical examples components of a magnetic field along a part of the earth's surface;
Figure 5B shows the difference of two orthogonal components of the magnetic fields along a part of the earth's surface related to the situation sketched in figures 1A and 1B;
Figure 6 is similar to Figure 3A and shows the application of a grid of magnetometers.

In the present application, similar or corresponding features are denoted by similar or corresponding reference signs.

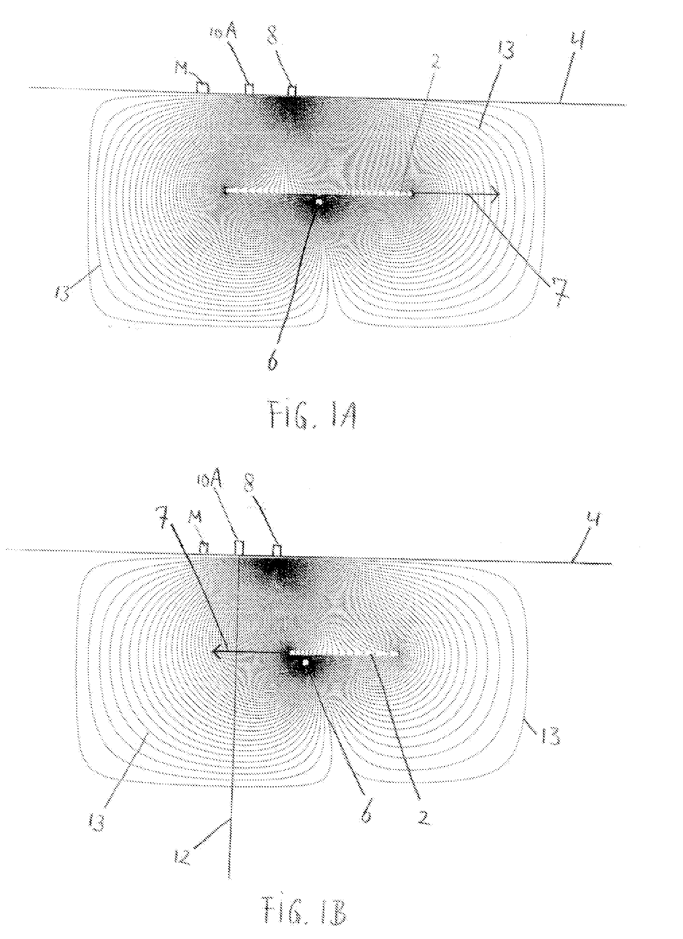

Figures 1A and 1B show a hydrocarbon reservoir 2 below the earth's surface 4, in a cross-sectional view of a portion of the earth. More in general, it is noted that a hydrocarbon reservoir includes natural porous rock with naturally formed hydrocarbons in its pores. In figures 1A and 1B, a bottom current electrode 6 (i.e. a first electrode) is positioned below the hydrocarbon reservoir 2. A longitudinal direction of the hydrocarbon reservoir 2 is indicated with arrow 7.

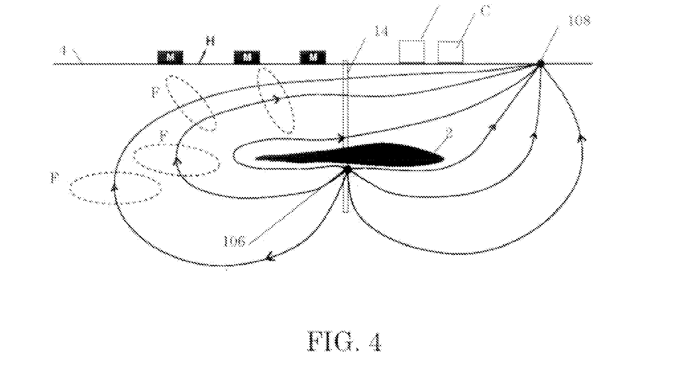

In figure 1A, a top current electrode 8 (i.e. a second electrode) is located above and over the hydrocarbon reservoir 2 and a measurement electrode 10A is located above and over the hydrocarbon reservoir 2. The measurement electrode 10A and the top current electrode 8 are part of a plurality of electrodes that are spaced apart from one another along a part of the earth's surface 4. The earth's surface can be formed by land, by water such as a sea or a lake, or by submerged land such as a sea bottom. The plurality of electrodes being spaced apart from one another along the part of the earth's surface may include that the plurality of electrodes are positioned under the part of the earth's surface, e.g. at a depth that is much smaller than a depth of the reservoir, and/or may include that the plurality of electrodes are partly located on top of the part of the earth's surface. In this example, the top current electrode 8 and the measurement electrode 10A form the plurality of electrodes, which is located over the hydrocarbon reservoir 2. The top current electrode 8 may be separate from the measurement electrode 10A. Also, the advantageous application of a magnetometer M is shown, the function of which will be described below (regarding figures 4-7).

Figure 1B shows a situation wherein part of the hydrocarbon of the reservoir 2 has been produced. As a result, a lateral extent of the reservoir has changed, i.e. has become smaller. In figure 1B, the measurement electrode 10A is positioned above the hydrocarbon reservoir but is not anymore positioned over the hydrocarbon reservoir, as an imaginary straight line 12 that extends from the earth's surface 4, perpendicular to the earth's surface 4, cannot reach the hydrocarbon reservoir 2. As a result, the plurality of electrodes that is formed by the top current electrode 8 and the measurement electrodes 10A is located above the hydrocarbon reservoir 2 but not over the hydrocarbon reservoir 2.

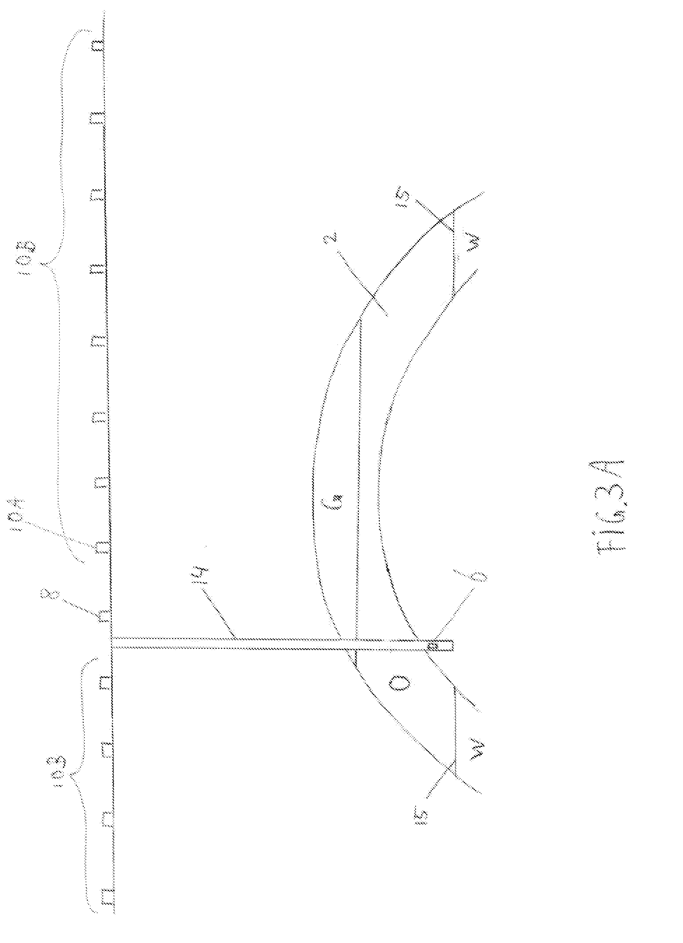

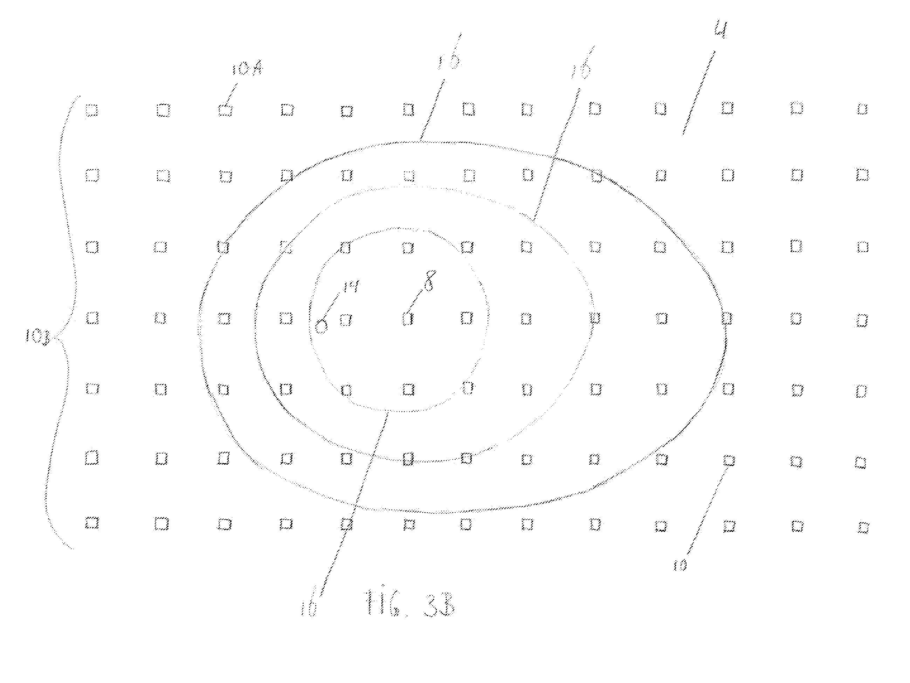

A first embodiment of a method (further referred to as the first method), includes the step of applying a current between the bottom current electrode 6 and the top current electrode 8 of the plurality of electrodes that are spaced apart from one another along the part of the earth's surface 2. This electrical current can run via a portion of the earth from the top current electrode 8 to the bottom current electrode 6, or can run via a portion of the earth from the bottom current electrode 6 to the top current electrode 8. The current can be a direct current or can be an alternating current. Current lines of the current are indicated in figures 1A and 1B with reference numeral 13. Equipotential surfaces may be defined perpendicular to these current lines. It will be clear that applying the current may require that the top current electrode 8 and the bottom current electrode 6 are electrically connected via an electrical connection, for example via a conductive cable through a wellbore, and/or via a conductive casing in the wellbore. The wellbore is not shown in figures 1A and 1B, but is shown in figures 3A, 3B, 4 with reference numeral 14.

The first method further includes the step of measuring an electrical potential, which is caused by the current, by means of the measurement electrode 10A. Although this example is explained by referring to only one measurement electrode 10A, it may be clear that in other examples further measurement electrodes may be employed in a similar way as the measurement electrode 10A is employed in this example. The measured electrical potential relates to a value of a potential field at a position of the measurement electrode 10A, which potential field is caused by the current.

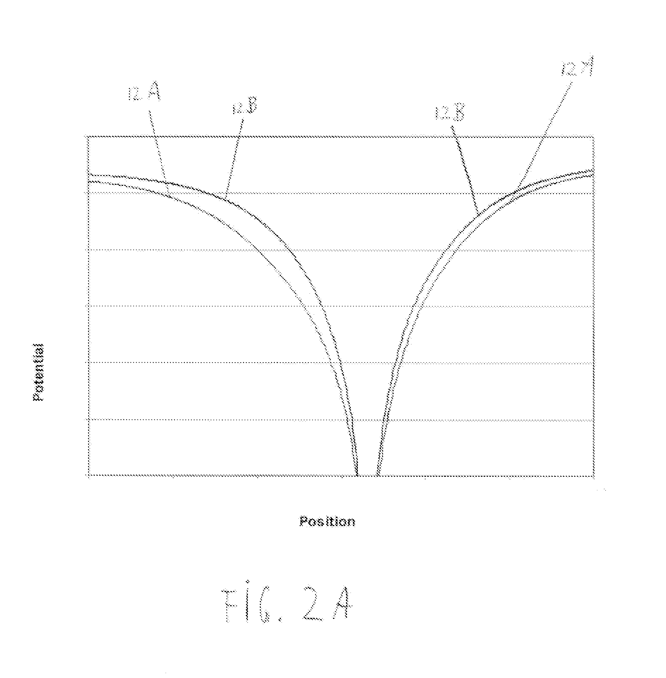

Figure 2A shows a graph of two typical examples of the potential field along the part of the earth's surface 4. Curve 12A may correspond with a situation that is comparable with figure 1A, and curve 12B corresponds with a situation that is comparable with figure 1B. Along the horizontal axis is a position along the part of the earth's surface 4, and along the vertical axis is a measure for the strength of the potential field.

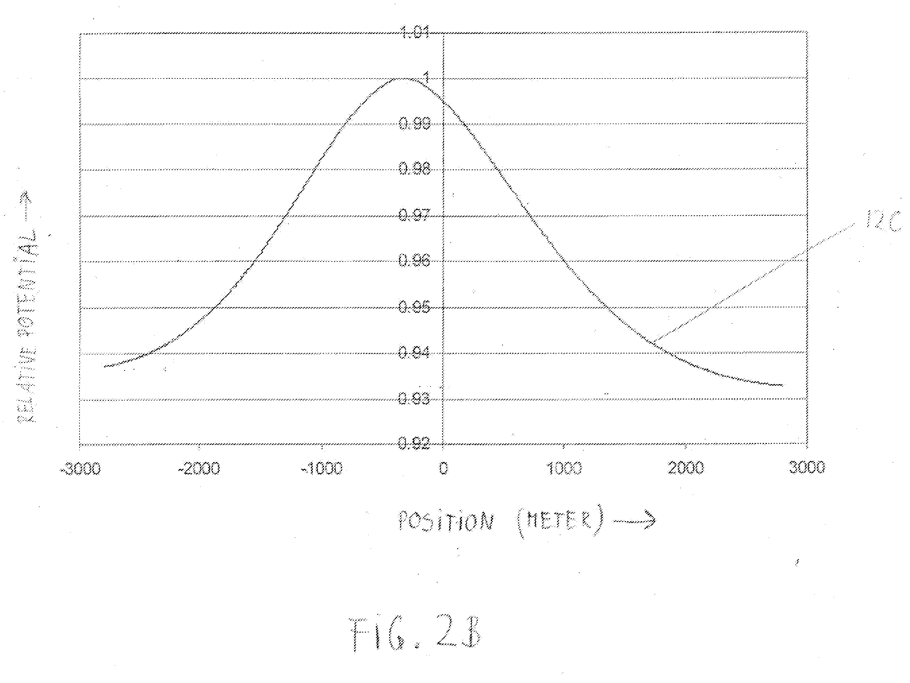

Figure 2B shows the relative potential along the part of the earth's surface 4 for the situation sketched in figures 1A and 1B. Along the horizontal axis is a position along the part of the earth's surface 4, and along the vertical axis is a measure for the relative strength of the potential field. The curve 12C of figure 2B indicates the value of the electrical potential in the situation of figure 1B normalised by the value of the electrical potential in the situation of figure 1A. The curve 12C thus indicates the relative change in potential due to the change in the extent of the hydrocarbon reservoir corresponding with the change from figure 1A to figure 1B, induced by producing the hydrocarbon reservoir 2. The top current electrode 8 in this example is located near a value of -400 meter of the position along the horizontal axis.

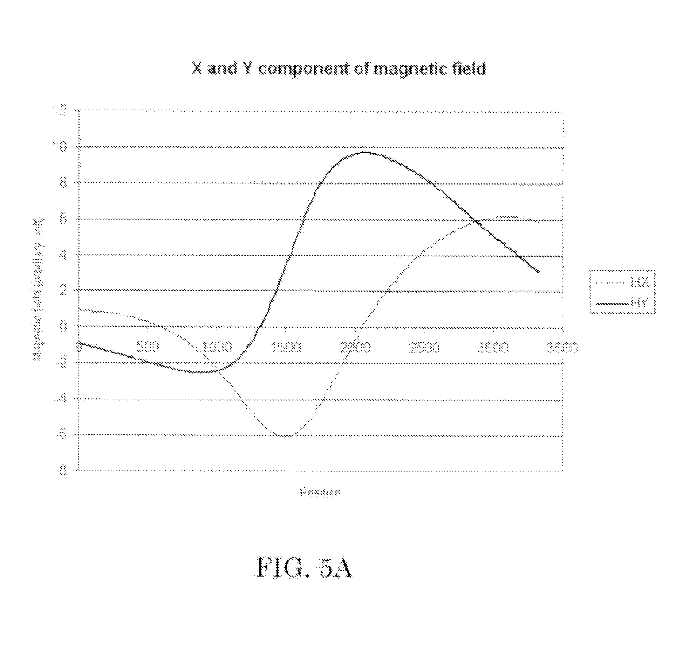

Besides, Figure 5A shows a graph of a typical example of orthogonal X and Y components (indicated by dashed line Hx and continuous line Hy, respectively) of a magnetic field (resulting from the same current that induces the electrical potential), both along the part of the earth's surface 4. The curves may correspond with a situation that is comparable with figure 1A. Along the horizontal axis is a position along the part of the earth's surface 4, and along the vertical axis is a measure for the strength of the two (X and Y) components of the magnetic field. The X and Y components (Hx and Hy) are more sensitive in this case and displayed as an example. In a further embodiment, the method includes measuring and using the total magnetic field that has three components (i.e. in three orthogonal directions, being the orthogonal x- and y-directions that are parallel to the earth's surface 4, and a z-direction normal to the earth's surface 4) .

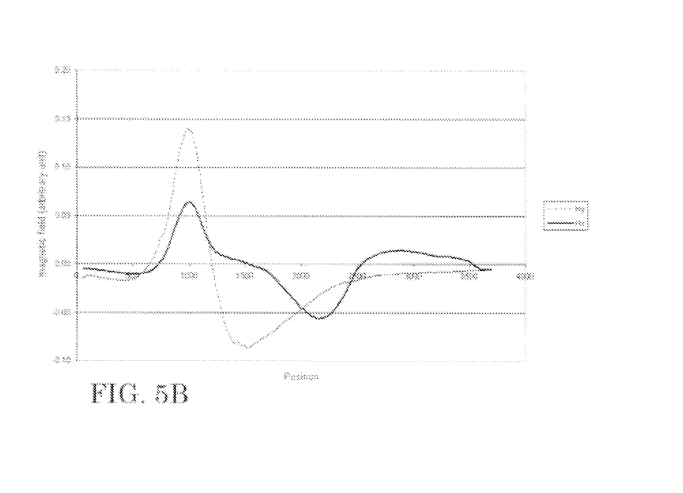

Figure 5B shows the relative magnetic field along the part of the earth's surface 4 for the situation sketched in figures 1A and 1B. Along the horizontal axis is a position along the part of the earth's surface 4, and along the vertical axis is a measure for the difference of the strength of the X and Y component of the magnetic field. The curve thus indicates the change in magnetic field due to the change in the extent of the hydrocarbon reservoir corresponding with the change from figure 1A to figure 1B, induced by producing the hydrocarbon reservoir 2.

The advantageous application of the magnetic field will be described here-below.

The first method further includes the step of inferring from the measured electrical potential an extent of the hydrocarbon reservoir, in a direction that is oriented substantially parallel to the earth's surface 2. An example of such inferring can be illustrated for a situation wherein the top current electrode 8 and the measurement electrode 10A are located near a vertical wellbore that reaches the hydrocarbon reservoir 2. In this situation, application of the current leads to the electrical potential at the position of the measurement electrode 10A. In this example, the electrical current runs through the earth from the bottom current electrode to the top current electrode. If the measured electrical potential is relatively low, it can be inferred that the lateral extent of the hydrocarbon reservoir is relatively large. In that case, the potential field along the current lines has already dropped relatively a lot. However, if the measured electrical potential is relatively high, it can be inferred that the lateral extent of the hydrocarbon reservoir is relatively small.

In a variant of the first method, inferring is further based on a position of the top current electrode, a position of the measurement electrode, and/or a position of the bottom current electrode. Taking into account one or more of these positions significantly enhances the accuracy of the method.

In another variant of the first method, the current is applied between the bottom current electrode and a first subset of the plurality of electrodes, which first subset includes the top current electrode 8. This enables optimal tuning of the potential field induced by the current for a specific reservoir. In this variant, inferring the extent of the hydrocarbon reservoir may be further based on positions of electrodes of the first subset.

For example in the situation of figure 1B, the bottom current electrode 6 is located under a central portion of the hydrocarbon reservoir 2. More in general, the central portion of the hydrocarbon reservoir 2 is considered to be the innermost half of the hydrocarbon reservoir 2. It may be clear that if the bottom current electrode 6 is located under the hydrocarbon reservoir 2, the hydrocarbon reservoir 2 is located over the bottom current electrode 6.

A second embodiment of a method (further referred to as the second method), is illustrated with reference to figures 3A and 3B. Figure 3A shows the reservoir 2, the bottom current electrode 6, the wellbore 14, and the plurality of electrodes in a cross-sectional view of a portion of the earth. An upper part G of the reservoir 2 may contain gas. A lower part *O* of the reservoir 2 may contain oil. Below the oil, water may be present, indicated with reference numeral W. The oil-water contact is indicated with reference numeral 15.

Figure 3B shows the wellbore 14 and the plurality of electrodes in a top view of the part of the earth's surface 4. In figures 3A and 3B, the plurality of electrodes that are spaced apart from one another along the part of the earth's surface 4, is formed by the top current electrode 8 and a second subset 10B of the plurality of electrodes that includes the measurement electrode 10A. It may be clear that the second subset 10B may contain, preferably only, further measurement electrodes that are similar to the measurement electrode 10A.

In figure 3B, the electrodes of the plurality of electrodes are spaced apart from one another in a grid along the part of the earth's surface 4. The grid in figure 3B is a regular grid pattern. However, it may be clear that other regular grid patterns, or irregular grid patterns, can also be used. More in general, a typical distance between neighbouring electrodes is in a range from 10 meter to 10000 meter, more preferably in a range between 50 meter and 1000 meter, in particular around 100 meter or around 200 meter.

The second method includes the step of applying the current between the bottom current electrode 6 and the top current electrode 8 of the plurality of electrodes that are spaced apart from one another along the part of the earth's surface 2. The second method further includes measuring a set of electrical potentials that includes the electrical potential, by means of the second subset 10B of the plurality of electrodes, which second subset 10B includes the measurement electrode 10A and the further measurement electrodes.

The second method further includes inferring from the set of measured electrical potentials the extent of the hydrocarbon reservoir 2, wherein inferring may further be based on positions of measurement electrodes of the second subset 10B.

In the second method, inferring may be based on an electrical potential map determined after an appropriate mathematical transformation from the set of measured electrical potentials and the positions of the electrodes of the second subset. Such a mathematical transformation includes interpolating between the positions of the electrodes of the second subset, and is known as such to the skilled person. Such a map may include equipotential lines, indicated with reference number 16 in figure 3B. These equipotential lines 3B may be obtained by interpolation between the electrical potentials measured by means of the second subset of electrodes. Suitable interpolation methods as such are known to the skilled person so that a further description is deemed superfluous. The map can be used for inferring a shape and/or size of the hydrocarbon reservoir in a plane that is oriented substantially parallel with the earth's surface. For example, an estimate of the shape and/or size of the hydrocarbon reservoir can be inferred by setting the shape and size of the reservoir equal to a shape and size of a transformed equipotential line having a specific value. This value may be determined in various ways, for example by comparing it with results from seismic inspection an/or alternative ways of monitoring the shape and/or size of the hydrocarbon reservoir. Once the specific value has been determined, it may be used for later measurements during production as well. As a result, determining the specific value is only needed once. However, it may be useful to determine it more often.

In a variation of the second method, application of the current between the bottom current electrode and the top current electrode may be repeated. For a repetition, the top current electrode was previously used as the measurement electrode. That is, for each repetition a distinct electrode of the plurality of electrodes is used as the top current electrode. In addition, measuring the electrical potentials by means of the electrodes of the second subset may be repeated. In this way tomography can be applied. Preferably, all electrodes of the plurality of electrodes are used at least once as the top current electrode.

In a third embodiment of a method (the third method), the first method, the second method, and/or another method may be repeated a plurality of times. The third method further includes the step of monitoring the development of the extent of the hydrocarbon reservoir in time. Monitoring in time here means monitoring the extent of the reservoir in the direction that is oriented substantially parallel with the earth's surface (i.e. the lateral extent), or the shape and/or size of the reservoir in the plane that is oriented substantially parallel with the earth's surface, at a plurality of moments in time. In this way, for example a deviation such as a bulge in the equipotential lines may be detected, indicating that oil is being trapped in the reservoir. Then, adequate measures can be taken in order to produce that oil as well, and the effect of these measures can be determined.

Monitoring in time may be based on the extents inferred in the first method, the second method, and/or the other method. Alternatively or additionally, it may be based on changes in the electrical potentials measured by means of the measuring electrodes of the second subset. Then, the third method has the general advantage that it is relatively insensitive to irregularities in the earth that influence the potential field along the part of the earth's surface.

More in general, at least one, for example two or more than two electrodes of the second subset, of which at least one electrode is separate from the measurement electrode, may be located in a wellbore that extends from the part of the earth's surface, preferably towards the hydrocarbon reservoir. Such a placement of at least one of the electrodes of the second subset further increases the sensitivity for inferring the extent of the hydrocarbon reservoir.

It may be clear that, more in general, in figures 1A, 1B, and 3A the bottom current electrode 6 and the top current electrode 8 are located at opposite sites of the hydrocarbon reservoir. This has the general advantage that the applied current is forced to flow predominantly around the reservoir. As a result, the potential field with a specific shape around the hydrocarbon reservoir is induced. This specific shape is determined by i.e. the positions of the bottom current electrode 6, by the position of the first electrode 8, and by the extent of the hydrocarbon reservoir.

Also, now it has been found that, similarly, a magnetic field with a specific shape around the hydrocarbon reservoir is induced. This specific shape of the magnetic field is also determined by i.e. the positions of the bottom current electrode 6, by the position of the first electrode 8, and by the extent of the hydrocarbon reservoir. The advantageous application of the magnetic field will be described here-below.

One advanced way of inferring the extent of the hydrocarbon reservoir 2 in the direction that is oriented substantially parallel to the earth's surface 4, or the shape and/or size of the hydrocarbon reservoir 2 in the plane that is oriented substantially parallel to the earth's surface 4, is to carry out numerical simulations. To this end the first, second, and/or third method, and/or variations thereof, may include the step of carrying out a numerical simulation of applying the current between the bottom current electrode 6 and the top current electrode 8. The numerical simulation will yield the electrical potential, which can be considered as a numerical simulation of measuring the electrical potential. The numerical simulations may be carried out by using a geo-electrical model. This model is based on electrical properties of a first region of the earth in and around the hydrocarbon reservoir, and of a second region of the earth from the second region up to the earth's surface. Such models as such are known to the skilled person and a further description is deemed superfluous. Special about the geo-electrical model used here is that it includes at least a simulated extent of the hydrocarbon reservoir as an input parameter, and includes at least a simulated electrical potential along the simulated earth's surface as an output parameter. By using the geo-electrical model, inferring the extent of the hydrocarbon reservoir 2 may include matching the simulated electrical potential and the electrical potential measured by means of the measurement electrode 10A of the plurality of electrodes, by, optionally iterated, adapting of the simulated extent of the hydrocarbon reservoir in the numerical simulation. It may further include monitoring the extent of the hydrocarbon reservoir by determining the extent of the hydrocarbon reservoir 2 from the simulated extent of the hydrocarbon reservoir.

### Magnetic field detection

Figures 1A, 1B, 4 and 6 also schematically show embodiments according to the present invention, using measurement of the magnetic field resulting from the current instead of or in addition to measuring the electric potential. As is explained in the above, Figures 5A and 5B show respective examples (in respective graphs) relating to the x-component and y-component of the magnetic field.

Particularly, each of the figures 1A, 1B, 4 and 6 shows a system according to the invention, configured to monitor a hydrocarbon reservoir 2 located below the earth's surface. The system includes at least one first electrode 6, 106, at least one second electrode 8, 108, the electrodes being positioned such that the reservoir 2 extends between the first and second electrode. A current source K is available, operatively connectable to the electrodes 6, 8, 106, 108 for applying an electric current there-between. In each case, one or more magnetometers M are provided, configured to measure a magnetic field, which is caused by the current. Also, the system includes a processor C, operatively connectable to the one or more magnetometers to receive measurement results there-from, and configured to infer from the measured magnetic field an extent of the hydrocarbon reservoir 2.

Thus, the system and respective method according to the present invention can include a system and method that has been described above regarding figures 1-3 (including one or more measurement electrodes 10A, 10B), however that is not essential to the present invention.

As follows from the drawing, preferably, again, at least one wellbore is provided, the wellbore 14 penetrating a bottom of the reservoir 2. For example, the wellbore 14 can be a production wellbore, used to produce the reservoir. Also, the wellbore 14 can be a wellbore that is not active, or only active during part of the time, or a wellbore that had been used to produce the reservoir (but is not used anymore), a wellbore that has been drilled as a reconnaissance well, or a different type of wellbore.

A first electrode 6, 106 can be located in the wellbore 14, below the reservoir 2. Also, the wellbore 14 can guide or include electrical connections, wiring, communication means or the like, to connect the downhole electrode 6, 106 to the current source K. Particularly, the first electrode 6, 106 can be located at a depth of 100 m or more below the earth's surface, for example a depth of 1000 m or more. Also, the first and second electrode 6, 8; 106, 108 can be spaced-apart over a distance of more than 100 m. Also, preferably, a relatively long wellbore is used, for example a wellbore with a length of more than 100 m. Naturally, the length of the wellbore will depend on the configuration and the depth of the reservoir 2. In any case, in the present embodiment, the wellbore has been dimensioned such that a distal lower end of the wellbore 14 is located below a lower side of the reservoir 2, for locating the lower electrode below that lower side.

It should be noted that the current source K (depicted in Fig. 4), can be arranged in various locations, such as on or above the earth's surface, or elsewhere (such as near the lower electrode 106). Also, the current source K as such can be configured in various ways, and can be configured to provide direct current (DC), alternating current (AC), or both.

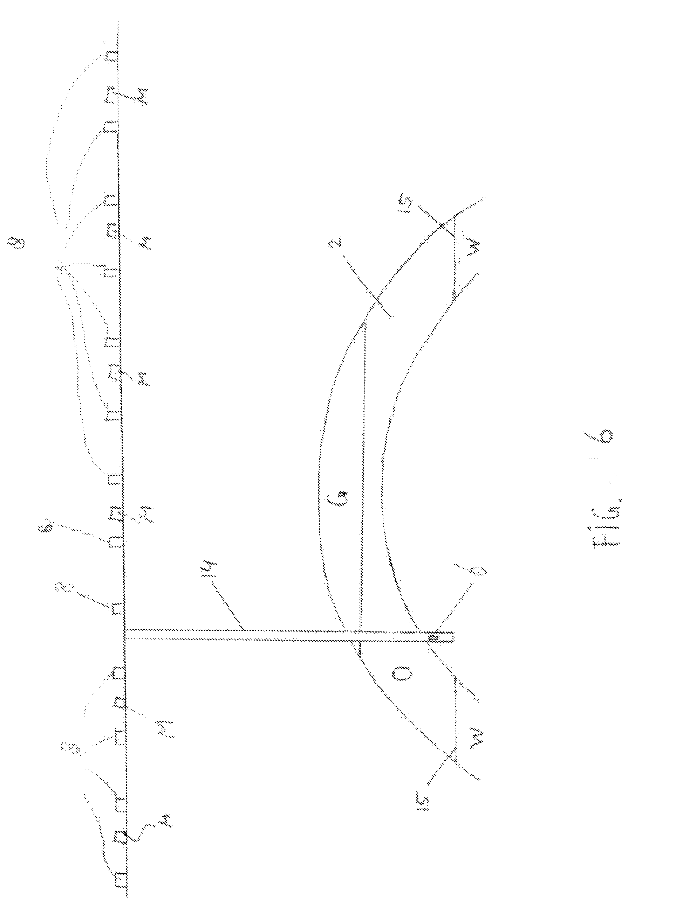

The embodiment shown in Figure 1 includes the application of one magnetometer M. In figure 4, a plurality of magnetometers M is used. Figure 6 depicts application of a grid of top electrodes, in combination with a grid of magnetometers M. In each embodiment, a magnetometer M can be located on or near the earth's surface, or for example at various heights with respect to the earth's surface (such as a height in the range of 0-10 meters from the surface). Each magnetometer M is configured to detect to magnetic field that results from currents flowing between the first and second electrodes. The field at one such location is depicted with arrow H in figure 4. Also, figure 4 schematically shows some individual magnetic field lines, with dashed lines F.

Referring to figures 1A, 1B, 4, 6 in a method according to the present invention, the hydrocarbon reservoir 2 is monitored by:
a) applying an electric current (using the current source K) between a first electrode (6; 106) and a second electrode (8; 108), wherein at least part of respective current lines circumvent (surround) the reservoir 2;
b) measuring a magnetic field (using the one or more magnetometers M), which is caused by the current; and
c) inferring (by the processor C) from the measured magnetic field an extent of the hydrocarbon reservoir 2, particularly in the direction 7 that is oriented substantially parallel with the earth's surface.

During operation of the present example, each first electrode 6; 106 is preferably located deep below the earth's surface, in a wellbore 14 that traverses the reservoir 2 (for example at an afore-mentioned depth).

Similar to the above-described electrical potential measurements, in the present embodiments of measuring magnetic fields, the inferring in the step c) can be further based on a position of the first electrode 6; 106, and a position of the second electrode 8; 108, and in addition the position(s) of the magnetometer(s) M.

The method can include measuring the magnetic field at different locations at or near the earth's surface. A single, movable magnetometer can be used for that aim. In preferred embodiments, as in figures 4, 6, a plurality of magnetometers M is positioned at different locations, to locally measure respective magnetic fields, simultaneously.

For example, and referring to Fig. 6, there can be provided a plurality of second electrodes 8 that are spaced apart from one another along the part of the earth's surface 4. The plurality of electrodes 8 can be spaced apart from one another in a grid along the part of the earth's surface 4 (as in Fig. 3B). Optionally, one or more of these electrodes 8 (but not all) is used as an electric potential measurement electrode. Also, for example, the grid can be a regular grid pattern, another regular grid pattern, or an irregular grid pattern. Again, a typical distance between neighbouring electrodes can be in a range from 10 meter to 10000 meter, more preferably in a range between 50 meter and 1000 meter, in particular around 100 meter or around 200 meter.

Besides, and still referring to Fig. 6, there can be provided a plurality of spaced-apart magnetometers M. The magnetometers M can be spaced apart from one another in a grid along the part of the earth's surface 4, for example a regular grid pattern or an irregular a grid pattern. Also, a typical distance between neighbouring magnetometers M can be in a range from 10 meter to 10000 meter, more preferably in a range between 50 meter and 1000 meter, in particular around 100 meter or around 200 meter. Application of a grid of magnetometers M is preferably combined with application of a plurality of second (top) electrodes 8, 108, however, a grid of magnetometers M can also be used in a system having a single second (top) electrode 8.

In case of application of a plurality of second electrodes 8, currents can be applied between the bottom current electrode 6 and the top current electrode 8 of the plurality of electrodes that are spaced apart from one another along the part of the earth's surface 2. A set of respective magnetic fields (resulting from the currents) can be measured, by means of the plurality of magnetometers M. In that case, also, the method can further include inferring from the set of measured magnetic fields the extent of the hydrocarbon reservoir 2, wherein inferring may further be based on positions of the magnetometers M.

Particularly, in that case, inferring may be based on a magnetic field map determined after an appropriate mathematical transformation from the set of measured magnetic fields and the positions of the magnetometers M. Such a mathematical transformation includes interpolating between the positions of the magnetometers M, and is known as such to the skilled person. The magnetic field map can be used for inferring a shape and/or size of the hydrocarbon reservoir in a plane that is oriented substantially parallel with the earth's surface.

In a variation, application of the current between the bottom current electrode 6 and the top current electrode 8 may be repeated, wherein different top electrodes 8 are used during different (subsequent) measurement periods (to detect the magnetic fields, using the magnetometers M). Preferably, each of the top electrodes 8 are used at least once as the active top current electrode.

As follows from the above, in a further embodiment a development of the extent of the hydrocarbon reservoir is monitored in time. The monitoring preferably utilizes the measurement results provided by the magnetometer(s) M.

Good results can be obtained by carrying out the combination of above-mentioned steps a) and b) a plurality of times.

Moreover, a non-limiting embodiment uses the step of:
e) carrying out a numerical simulation of steps a) and b) by using a geo-electrical model.

More particularly, for example, inferring the extent of the hydrocarbon reservoir 2 in the direction that is oriented substantially parallel to the earth's surface 4, or the shape and/or size of the hydrocarbon reservoir 2 in the plane that is oriented substantially parallel to the earth's surface 4, is to carry out numerical simulations. To this end the present method may include the step of carrying out a numerical simulation of applying the current between the bottom current electrode 6, 106 and the top current electrode 8, 108. The numerical simulation will yield the magnetic field, which can be considered as a numerical simulation of measuring the magnetic field. The numerical simulations may be carried out by using a geo-electrical model. This model is based on electrical properties of a first region of the earth in and around the hydrocarbon reservoir, and of a second region of the earth from the second region up to the earth's surface. Such models as such are known to the skilled person and a further description is deemed superfluous. Special about the geo-electrical model used here is that it includes at least a simulated extent of the hydrocarbon reservoir as an input parameter, and includes at least a simulated magnetic field along the simulated earth's surface as an output parameter. By using the geo-electrical model, inferring the extent of the hydrocarbon reservoir 2 may include matching the simulated magnetic field and the magnetic field measured by means of the one ore more magnetometers M, by, optionally iterated, adapting of the simulated extent of the hydrocarbon reservoir in the numerical simulation. It may further include monitoring the extent of the hydrocarbon reservoir by determining the extent of the hydrocarbon reservoir 2 from the simulated extent of the hydrocarbon reservoir.

Also, in case one or more electric measurement electrodes 10A, 10B are used to detect the electrical potential (as in the earlier examples mentioned above), the above-described numerical simulation relating to the electrical potential, and the matching of resulting simulated electrical potential and the measured electrical potential, can be additionally applied.

In the above, applying the current as such, and measuring the electrical potential or the plurality of electrical potentials as such, may be carried out in ways known to the skilled person, so that a further description is deemed superfluous.

It is thus illustrated that the first, second, and/or third method, and/or variations thereof, can be used for monitoring the lateral extent, i.e. the extent in a direction that is oriented substantially parallel with the earth's surface, of the hydrocarbon reservoir 2 below the earth's surface. However, the invention is not limited to any embodiment herein described and, within the purview of the skilled person, modifications are possible which may be considered within the scope of the appended claims. Equally all kinematic inversions are considered inherently disclosed and to be within the scope of the present invention. The use of expressions like: "preferably", "in particular", "typically", "especially", etc. is not intended to limit the invention. The indefinite article "a" or "an" does not exclude a plurality. Features which are not specifically or explicitly described or claimed may be additionally included in the structure according to the present invention without deviating from its scope.

## Claims

1. Method of monitoring a hydrocarbon reservoir (2) located below the earth's surface, including the steps of:
a) applying an electric current between a first electrode (6; 106) and a second electrode (8; 108), the reservoir (2) extending between the first and second electrode (6, 8; 106, 108) so that at least part of respective current lines circumvent the reservoir (2);
b) measuring a magnetic field, which is caused by the current; and
c) inferring from the measured magnetic field an extent of the hydrocarbon reservoir (2), particularly in a direction that is oriented substantially parallel with the earth's surface.

2. The method according to claim 1, wherein each first electrode (6; 106) is located in a wellbore (14) that traverses the reservoir (2).

3. The method according to claim 1 or 2, wherein the first electrode (6, 106) is located at a depth of 100 m or more below the earth's surface, for example a depth of 1000 m or more.

4. The method according to any of the preceding claims, wherein the first and second electrode (6, 8; 106, 108) are spaced-apart over a distance of more than 100 m.

5. The method according to any of the preceding claims, wherein each first electrode (6; 106) is located below the hydrocarbon reservoir.

6. Method according to any of the preceding claims, wherein inferring in step c) is further based on a position of the first electrode (6; 106), and a position of the second electrode (8; 108).

7. Method according to any of the preceding claims, including measuring the magnetic field at different locations at or near the earth's surface..

8. The method according to any of the preceding claims, wherein the current lines surround the reservoir (2), when viewed in a cross-section.

9. Method according to any of the preceding claims, wherein the first electrode (6; 106) is located under a central portion of the hydrocarbon reservoir.

10. Method according to any of the preceding claims, further including the step of:
e) carrying out a numerical simulation of steps a) and b) by using a geo-electrical model, which is based on electrical properties of a first region of the earth in and around the hydrocarbon reservoir (2), and of a second region of the earth from the second region up to the earth's surface, wherein the geo-electrical model includes at least a simulated extent of the hydrocarbon reservoir as an input parameter, and includes at least a simulated magnetic field along the simulated earth's surface as an output parameter;
wherein inferring in step c) includes matching the simulated magnetic field and the magnetic field measured in step b), by, optionally iterated, adapting of the simulated extent of the hydrocarbon reservoir in the numerical simulation, and further includes determining the extent of the hydrocarbon reservoir from the simulated extent of the hydrocarbon reservoir.

11. Method according to one of the preceding claims, including carrying out the combination of steps a) and b) a plurality of times, further including the step:
f) monitoring the development of the extent of the hydrocarbon reservoir in time.

12. A system configured to monitor a hydrocarbon reservoir (2) located below the earth's surface, the system for example being configured to carry of a method according to any of the preceding claims, the system including:
- a first electrode (6; 106);
- a second electrode (8; 108);
the first and second electrode being positioned such that the reservoir (2) extends between the first and second electrode;
- a current source (K), operatively connectable to the electrodes for applying an electric current there-between;
- one or more magnetometers (M) configured to measure a magnetic field, which is caused by the current; and
- a processor (C), operatively connectable to the one or more magnetometers to receive measurement results there-from, and configured to infer from the measured magnetic field an extent of the hydrocarbon reservoir (2).

13. The system according to claim 12, including at least one wellbore (14) that penetrates a bottom of the reservoir, a first electrode (6; 106) being located in the wellbore and below the reservoir (2).

14. The system according to claim 13, wherein a length of the wellbore is larger than 100 m.

15. The system according to any of claims 12-14, including at least one measurement electrode (10A, 10B) for measuring an electrical potential, which is caused by the current.
